(19) Europäisches Patentamt
European Patent Office
Office européen des brevets

(11) Publication number: **0 063 317**
**B1**

(12) # EUROPEAN PATENT SPECIFICATION

(45) Date of publication of patent specification: **05.11.86**

(51) Int. Cl.$^4$: **G 03 B 21/62**

(21) Application number: **82102985.7**

(22) Date of filing: **06.04.82**

(54) **Rear projection screen.**

(30) Priority: **07.04.81 JP 51194/81**
**12.06.81 JP 90544/81**

(43) Date of publication of application:
**27.10.82 Bulletin 82/43**

(45) Publication of the grant of the patent:
**05.11.86 Bulletin 86/45**

(84) Designated Contracting States:
**DE GB NL SE**

(56) References cited:
**FR-A-2 276 605**
**GB-A- 656 651**
**US-A-2 738 706**
**US-A-3 218 924**
**US-A-3 257 900**
**US-A-3 279 314**

(73) Proprietor: **MITSUBISHI RAYON CO. LTD.**
**3-19, Kyobashi 2-chome Chuo-Ku**
**Tokyo 104 (JP)**

(72) Inventor: **Yata, Yukio**
**Dainiinagehaitsu 5-302 1207-1, Konakadaicho**
**Chiba-shi Chiba-ken (JP)**
Inventor: **Inagaki, Koichi**
**12-22, Nakamachi-5-chome**
**Hoya-shi (JP)**

(74) Representative: **Grupe, Peter, Dipl.-Ing. et al**
**Patentanwaltsbüro Tiedtke-Bühling-Kinne-Grupe-Pellmann-Grams-Struif Bavariaring 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 063 317 B1

## Description

The present invention relates to a rear projection screen according to the preamble of claim 1, suitable for use as, for example, a screen for video projectors. The present invention relates more particularly to a rear projection screen having a greater angle of field of vision on the viewing side and an increased brightness.

Rear projection screens have been widely available for video projectors, microfilm readers and computer display systems, and various studies and attempts have been made for improving the light transmitting characteristics of the rear projection screen for attaining greater angle of field of vision, higher contrast and higher resolution.

From US—A—3 279 314 a rear projection screen made of transparent sheet formed therein with conical or parabolic projections is known. These projections have reflective lateral surfaces and peculiar axes that gradually vary from the center part of the peripheral part of the rear projection screen. Due to the shapes of projections which are conical or parabolic the light rays passing through the rear projection screen and reflected by the lateral surfaces are diffused both vertically and horizontally. Since therefore the projections according to this prior art have each peculiar optical axes the provision of metallic reflective surfaces thereto is inevitable. By this the manufacturing costs are comparatively high all the more since the axial directions of the projections vary with different positions in the screen, so that a relatively complicated manufacturing tool is necessary.

From US—A—2 738 706 a back-lighted projection screen is known in which similar to the arrangement according to US—A—3 279 314 parallely arranged lenses are provided which have parabolic shape. In this screen each lens is entirely covered with a reflective layer and an additional ambient light absorbing layer, with the exception of the centre part thereof. By this design manufacturing costs cannot be kept at a desired low level since the shape of the projections used in this prior art needs very exact manufacturing parameters and additionally further manufacturing steps.

In order to find a solution which has in particular economical advantages while still providing good light transmitting characteristics with a high contrast, a rear projection screen according to the preamble of claim 1 has been proposed. According to this proposal solely or in combination with a lens or a diffusion plate, a lenticulated surface having a multiplicity of minute cylindrical lenses (lenticules) arranged continually, is used.

This lenticulated surface is effective in diffusing the light impinging thereon. More specifically, a lenticulated surface having a multiplicity of minute vertically extending cylindrical lenses arranged continually on a vertical plane laterally diffuses the light, while the lenticulated surface having a multiplicity of minute horizontally extending cylindrical lenses arranged continually on a vertical plane longitudinally diffuses the light. When this lenticulated surface is used as a screen, the maximum diffusion angle is varied largely depending on whether the lenticulated surface is faced to the incident light, i.e. towards the light source or the viewer. Namely, as is known to those skilled in the art, it is possible to obtain a greater diffusion angle when the surface is faced to the light source than when the same is faced to the viewer.

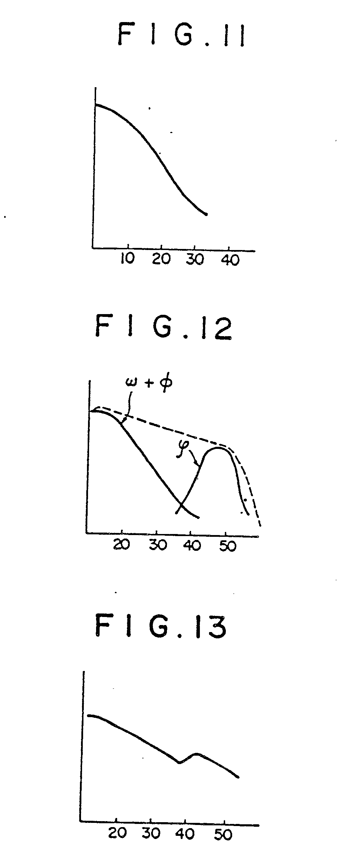

In general however, each lenticule of the lenticulated surface of the kind described has a circular cross-section—as it is also the case in a screen according to GB—A—656 651—so that the angle of diffusion of light is considerably small. In consequence, the brightness is drastically lowered disadvantageously in the region of viewing angles exceeding 30°, as will be seen from Fig. 11. This reduction of brightness causes not only the problem that the picture surface is darkened when viewed from the region out of the viewing angle of 30° but also a problem that the picture surface becomes completely invisible due to a surface reflection in bright circumstance under the influence of ambient light.

Starting from this proposal it is desired for an increase of the field angle of the horizontal plane that the light entering from its projection side emanates exclusively from the crests of the lens units. The part of the entire light entering from the projection side which emanates from the flank portions, is disadvantageous in so far as the amount of the entire light, which is scattered across a wide field angle, is reduced thereby.

It is therefor the object of the present invention to provide a rear projection screen according to the preamble of claim 1, with which by simple measures the overall brightness of the screen can be raised while maintaining the large angle of field of vision.

This object is achieved by the features as indicated in the characterising part of claim 1.

According to the invention exclusively by geometrical measures there is provided an orientation of all the light rays onto the crest, at which a superimposed diffusion effect occurs raising not only the brightness itself but in combination with the last feature of claim 1 leads to the effect that the uniformity of brightness is raised. Lensed surfaces in the troughs lead to an additional distribution of emanating light which can rays the light transmitting characteristic curve—as can be seen from a comparison between Fig. 11 and 12—such that there is provided a suitable transition range to the brightness peak at greater viewing angles, caused by the diffusion effect of the internally reflected rays at the crest. By this not only the brightness level becomes more pleasant for the user. Additionally the fabrication of the mould for the screen and the manufacturing of the screen becomes easier. For the lens surfaces in the troughs are no more closely adjacent together, so that no sharp portions are formed, thereby facilitating the design of the mould and the deforming work, even if the angle of inclination of the flanks is in a range that has been inadmissible up to now in view of manufacturing criterions.

With the further development of the present invention according to claim 7 the contrast of view on the rear projection screen is further enhanced whereby the coating layer has the additional advantage that the function of total reflection at the medium interface in the total reflection surface is not deteriorated by the light absorbing layer.

The present invention will be more readily understood from the following description of the preferred embodiments thereof with reference to the accompanying drawings.

Brief description of the drawings

Fig. 1 is a perspective view of a rear projection screen provided with a lenticulated surface which includes lenticules each having a crest, troughs and flank portions in accordance with a feature of the invention, at least a part of each flank being formed with a total reflection surface and lens surfaces being formed in the troughs.

Fig. 2 is a perspective view of another embodiment in which concaved lenses are formed in the trough portions of the lenticules of the rear projection screen;

Fig. 3 is a perspective view of a further embodiment in which convexed lenses are formed in the trough portions of the lenticules of the rear projection screen;

Fig. 4 is a sectional view of a still further embodiment in which a Fresnel lens is formed on the projecting side surface of the rear projection screen shown in Fig. 1;

Fig. 5 is a sectional view of a still further embodiment in which a Fresnel lens is formed on the projecting side surface of the rear projection screen shown in Fig. 3;

Fig. 6 is a sectional view of a still further embodiment in which a coating layer and a light absorbing layer are laminated on the total reflecting surface of the rear projection screen shown in Fig. 1;

Fig. 7 is a chart for explaining the light transmission characteristics of a total reflection surface;

Fig. 8 is a chart for explaining the light transmission characteristics in the embodiment shown in Fig. 1;

Fig. 9 is an illustration for explaining the characteristics shown in Fig. 8 in more detail;

Fig. 10 is a chart for explaining the light transmission characteristics in the embodiment shown in Fig. 3;

Fig. 11 is a graph showing the light transmitting characteristics of a conventional lenticulated surface;

Fig. 12 is a graph showing the light transmitting characteristics of the embodiment shown in Fig. 9;

Fig. 13 is a graph showing the light transmitting characteristics of the embodiment shown in Fig. 10; and

Fig. 14 is a plan view illustrating a general arrangement of a projection system using the rear projection screen embodying the present invention.

Description of the preferred embodiments

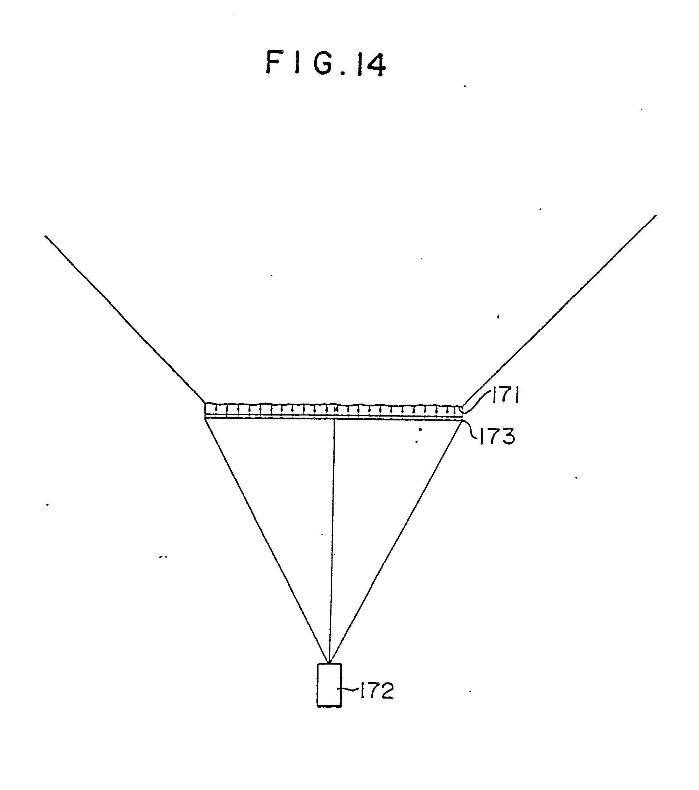

Before the embodiments of the present invention are described, the general arrangement of a projection system using a rear projection screen embodying the present invention will be first explained with specific reference to Fig. 14.

In Fig. 14 light rays diverging from a projector 172 impinge upon the rear surface of a rear projection screen 171 through a Fresnel lens 173 which converts the diverging light rays into parallel light rays. The light rays transmitted through the medium of the rear projection screen 171 in parallel relation are dispersed from the front surface of the rear projection screen 171 in a suitable viewing angle.

Hereinafter, preferred embodiments of the invention will be described with reference to the accompanying drawings.

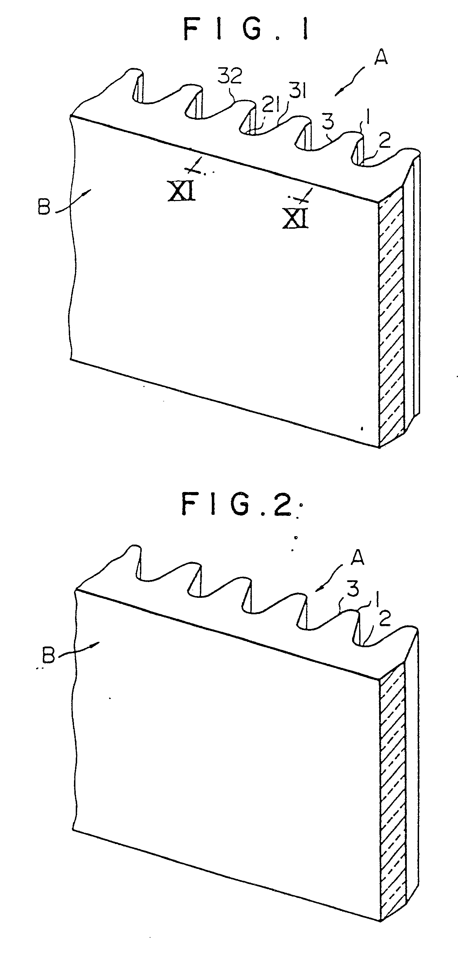

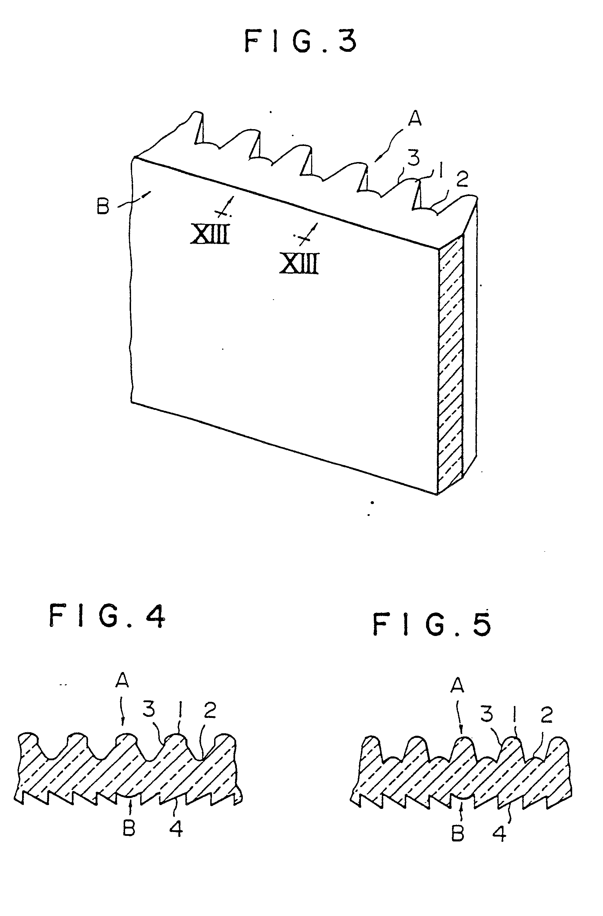

Figs. 1 to 3 are perspective views of rear projection screens embodying the invention. As will be seen from these Figures, the rear projection screen of the invention is provided on its viewing side surface a lenticulated surface formed with a plurality of lenticules each having a crest 1 and troughs 2 interconnected by intermediate flanks 3. As will be explained later, the flank 3 is provided at least a portion thereof with a total reflecting surface such that the light rays impinging thereto are totally reflected and then emanate through the crest 1. Figs. 1 to 3 show practical embodiments of the rear projection screen of the invention. More specifically, Fig. 1 shows an embodiment in which concaved lens surfaces 21 are formed in the troughs 2, the most part of each flank 3 constituting a total reflecting surface 31 leaving small portions of non-reflecting surfaces 32. Fig. 2 shows a further embodiment in which concaved lens surfaces 21 are formed in the troughs 2, the entire part of each flank 3 constituting a total reflecting surface 31. Finally, Fig. 3 shows a further embodiment in which, in place of the concaved lens surfaces 21 in the embodiment shown in Fig. 2, convexed lens surfaces 22 are formed.

In these embodiments, the projecting side surface B of the rear projection screen is flat and smooth. It is, however, effective to form a Fresnel lens on the projecting side surface. Figs. 4 and 5 are sectional views of embodiments in which a Fresnel lens is formed on the projecting side surface of the rear projection screen. More specifically, Fig. 4 shows a still further embodiment in which a Fresnel lens 4 is formed on the projecting side surface B of the embodiment shown in Fig. 1, while Fig. 5 shows a still further embodiment in which a Fresnel lens 4 is formed on the projecting side surface B of the embodiment shown in Fig. 3.

The Fresnel lens in this case is generally a circular Fresnel lens and the focal length thereof varies depending on applications of the screen. In the case of a rear projection screen for a large-size video projector, for example, the focal length f is usually between 1.0 and 1.2 m. The Fresnel lens 4 can also be incorporated in the embodiment shown in Fig. 2 through 4.

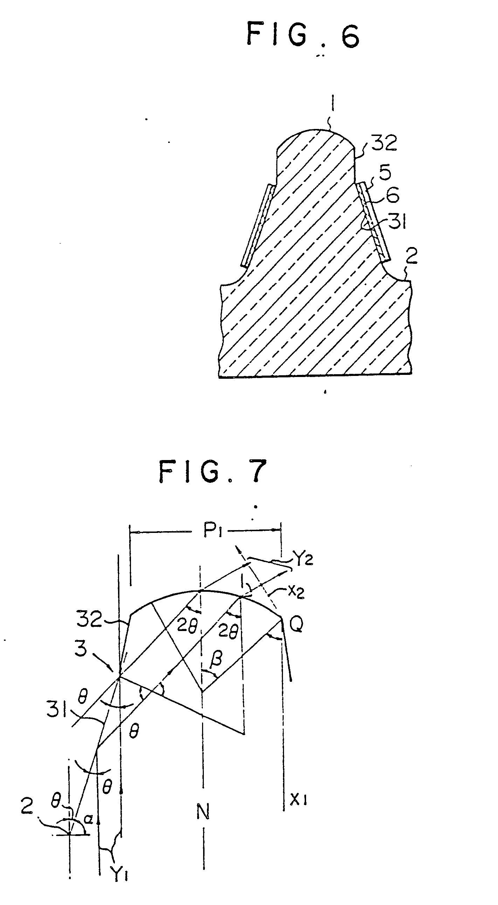

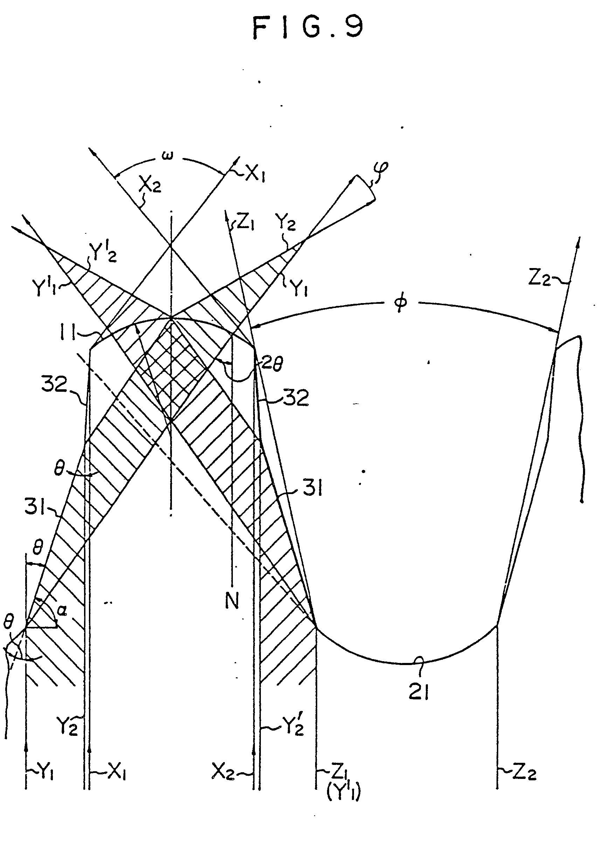

Fig. 6 shows still a further embodiment improved to increase the contrast of image on the rear projection screen. Namely, in the embodiment shown in Fig. 9, in order to prevent the absorption loss in the light absorbing layer 5, a coating layer 6 of a substance having a smaller refractive index than the medium is formed beforehand on the total reflecting surface and then the light absorbing layer 5 is formed on the coating layer 6. In the embodiment shown in Fig. 6, it is possible to make effective use of the total reflecting surface 31 which does not directly transmit the light therethrough to the viewing side surface A, so that the contrast of the image on the rear projection screen is improved considerably. Although this embodiment for obtaining higher contrast is explained in connection with the embodiment shown in Fig. 1, it will be clear to those skilled in the art that the above-explained construction for achieving higher contrast can equally be applied to all other embodiments described hereinbefore.

As has been described, the essential feature of the invention resides in the formation of a specific total reflecting surface 31 in each flank 3 of the lenticule in connection with the design of the troughs. The light transmission characteristics of the flank having the total reflecting surface will be explained hereinunder with reference to Figs. 7 through 10.

Fig. 7 is an enlarged view of a portion of the lenticulated surface of a rear projection screen in accordance with the invention. In this case, the flank 3 is provided with a total reflecting surface 31 and non-reflecting surfaces 32. The non-reflecting surfaces 32 are intended for facilitating removal of the medium from the mold in the process of production of the screen. Preferably, the non-reflecting surface 32 is formed in parallel with the optical axis or at an inclination angle of 1 to 5° to the optical axis.

On the other hand, the total reflecting surface 31 is adapted to make a total reflection of a part of the light rays impinging on the medium and to make the same emanate from the crest 1. It is necessary, however, that the totally reflected light and the light directly impinging on the crest 1 are not totally reflected by the medium interface of the crest 1. The angle θ of inclination of the total reflecting surface 31 to the optical axis is determined by the refractive index n of the medium. Hereinafter, an explanation will be made as to how the inclination angle θ is determined in relation to the refractive index n.

Referring to Fig. 7, light rays $Y_1$ and $X_1$ run in parallel with the normal axis N. The light ray $Y_1$ out of these two rays impinges on the total reflecting surface 31 at an angle θ and is totally reflected and emanates through the crest 1 as a ray $Y_2$. Thus, the total-reflected light intersects the normal axis N at an angle 2θ and emanates through the crest 1.

In order that the whole part of the totally reflected rays emanates through the crest 1, it is essential that this ray should not be totally reflected by the medium interface of the crest 1. This means that the angle 2θ must be smaller than the total reflection angle.

This relationship is expressed and determined as follows by the formula of total reflection.

$$n \sin 2\theta \leqq 1$$

$$\sin 2\theta \leqq \frac{1}{n}$$

$$2\theta \leqq \sin^{-1} \frac{1}{n}$$

$$\theta \leqq \frac{1}{2} \sin^{-1} \frac{1}{1n}$$

From this relation, it is understood that the angle α formed between the total reflecting surface 31 and the horizontal plane has to meet the following condition.

$$\alpha \geqq 90° - \frac{1}{2} \sin^{-1} \frac{1}{n}$$

The angle α of inclination of the total reflecting surface 31 is thus determined. Assuming that the medium is an acrylic resin having a refractive index n of 1.492, the angle α is calculated as follows:

$$\alpha \geqq 90° - \frac{1}{2} \sin^{-1} \frac{1}{1.492}$$

$$\alpha \geqq 90° - \frac{1}{2} 42.09°$$

$$\alpha \geqq 68.96°$$

Thus, the angle α must be greater than about 69°. However, if the angle 2θ of the ray passing through the crest 1 approaches the critical angle 42.09°, closely, the possibility of total reflection at the medium interface of the crest 1 is increased unfavourably, so that the angle 2θ is preferably smaller than the critical angle. This means that the angle α preferably approximates 90°. A too large angle α, however, makes the height of the crest excessively large in comparison with its width so as to make it difficult to form such a crest. Thus, the angle α is limited also from this point, and is preferably made small in order to facilitate the formation of the crest. As a compromise, therefore, the angle α is preferably selected to range between 70° and 80° when an acrylic resin is used as the medium (screen material).

A discussion will be made hereinunder as to the condition for eliminating total reflection of all rays at the crest 1. Representing the width of the crest 1 of the lenticule by $P_1$, the curvature of the medium interface by r and the rightmost end of the crest 1 by Q, the angel β formed between the normal line r and the vertical line N is expressed as follows.

$$\sin \beta = \frac{\frac{P_1}{2}}{r} = \frac{P_1}{2r}$$

This angle is the angle of incidence of the ray $X_1$ parallel to the ray $Y_1$ and passing the point Q. Therefore, the design should be made to meet the following condition of

$$\frac{P_1}{2r} \leqq \sin \frac{1}{n}.$$

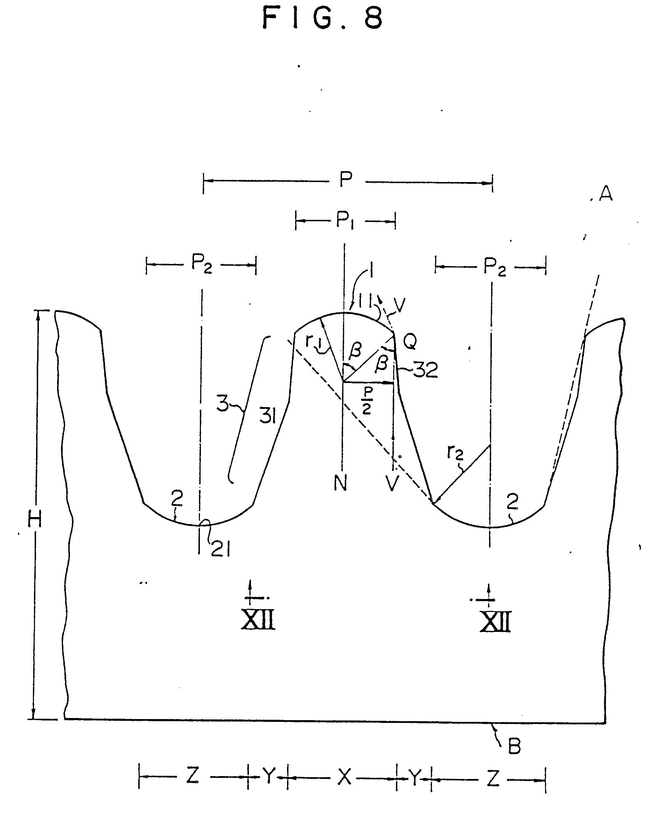

As has been described, by forming the total reflecting surface 31 on the flank 3, the light rays coming from the projecting side surface B are transmitted and largely diffused at the viewing side surface A. This phenomenon will be further described with reference to Figs. 8 and 9. These Figures show the embodiment shown in Fig. 1 in a larger scale. In these Figures, there are shown crests 1, troughs 2 and flanks 3. Convexed lenses 11 are formed on the crests 1, while a concaved lenses 21 are formed on the troughs 2. Also, the flank 3 is provided with a total reflecting surface 31.

As parallel light rays come into the lenticules having the above-described construction from the projecting side surface B, the ray impinging on the portion X corresponding to the crest 1 and the ray impinging on the portion Z corresponding to the trough 2 run straight through the medium, and are refracted and diffused at the surface of the convexed lens 11 on the crest 1 and the surface of the concaved lens 21 on the trough, respectively. This phenomenon will be explained in more detail with specific reference to Fig. 9.

The rays $X_1$ and $X_2$ which pass in the medium towards both marginal ends of the portion x of the crest 1 run straight and are refracted as illustrated when leaving the convexed lens surface 11 of the crest 1, while the rays $Z_1$ and $Z_2$ passing through both ends of the trough 2 are diffused. On the other hand, most portion of the rays coming into both ends of the portion Y of each flank 3, i.e. the rays in the region between $Y_1$ and $Y_2$ or between $Y_{1'}$ and $Y_{2'}$ are reflected on each total reflecting surface 31 and emanates through the convexed lens surface 11 on the crest 1.

An explanation will be made hereinunder as to the uniformity of brightness within the region of projection angle of the projected rays, with specific reference to Fig. 9. If there is any nonuniformity in the brightness, the brightness of a picture element is varied depending on the direction of viewing of the picture element. Referring to Fig. 9, the rays passing through the convexed lens surface 11 are diffused within the range ω after emanating through the crest 1, as in the cases of rays $X_1$ and $X_2$. On the other hand, the rays coming into the total reflecting surface 31, i.e. the rays between the rays $Y_1$ and $Y_2$, are totally reflected and emanate through the crest 1 as strong light rays within the range φ. On the other hand, the light rays which pass through the concaved lens surface 21 of the trough 2, i.e. the rays between $Z_1$ and $Z_2$, are diffused by the concaved lens surface 21 and emanate within the region ϕ. The resultant rays in the regions ω and ϕ exhibit brightness characteristics (ω+ϕ) shown in Fig. 12. As understood from this characteristics (ω+ϕ), the brightness of the resultant rays is drastically lowered in the angle region exceeding 30° from the center line of the crest 11. On the other hand, the rays φ reflecting from the total reflecting surface 31 and then emanating from the crest 11 form a strong light which represents brightness characteristics φ shown in Fig. 12. This ray advantageously compensate for the reduction of brightness in the abovementioned characteristics (ω+ϕ), thereby to further uniformalize the brightness within the reasonable viewing angle range. The curve shown by broken line in Fig. 12 shows total brightness characteristics due to ω, ϕ and φ with the assistance of a light diffusing means which will be mentioned hereinunder. The most suitable optical system for obtaining these characteristics can be selected by properly selecting optimum values to factors such as the height of the flank 3, pitches P, $P_1$ and $P_2$ of the lenticules, and the focal lengths of the convexed lens surface 11 and the concaved lens surface 21.

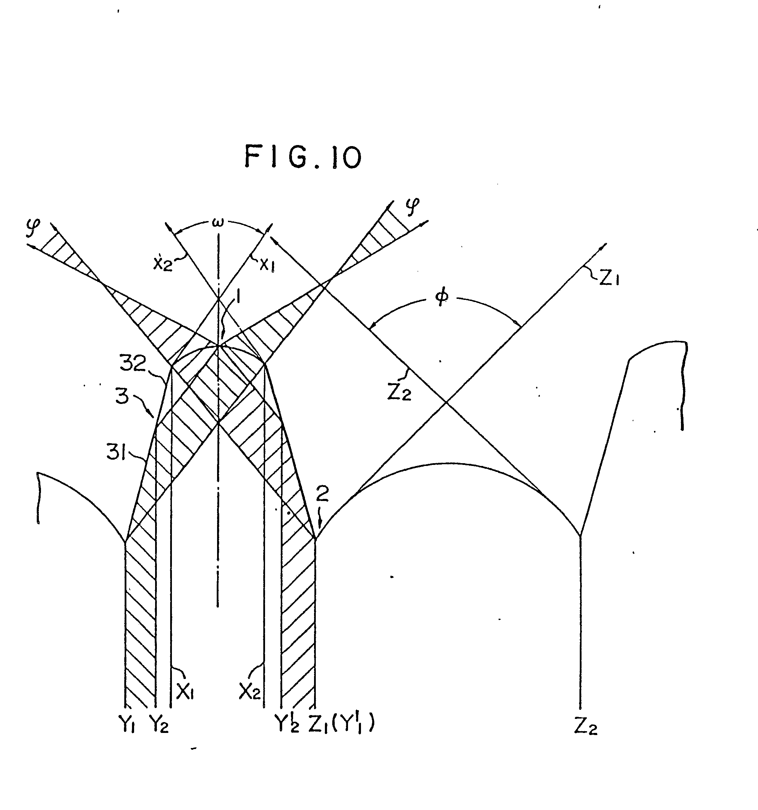

Fig. 10 shows the optical system of the rear projection screen as shown in Fig. 5. The rays in the range between $Y_1$ and $Y_2$ among the parallel light rays coming from the projecting side are totally reflected and emanate, as φ, from the crest. On the other hand, the rays in the range between $Z_1$ and $Z_2$ are diffused as ϕ after passing the focal point. Also, as shown in Fig. 9, the rays in the range between $X_1$ and $X_2$ are diffused as illustrated with the region ω. The rays between $Y_2$ and $X_1$ and the rays between $X_2$ and $Y_2$, are made to partially emanate and partially repeat reflection and refraction before emanation to the outside.

In this rear projection screen, the rays φ from the total reflecting surface 31 serves to increase the angle of field of vision and provides, in combination with the other rays ϕ and ω, brightness characteristics as shown in Fig. 13.

In the foregoing description of the embodiment, the material of the medium is stated as being an acrylic resin. This is because the acrylic resin exhibits superior optical properties and easy processability. It is possible, however, to use other materials such as vinyl chloride resins, polycarbonate resins, olefin resins, styrene resins and so forth. With these synthetic resins, the rear projection screen of the invention can be produced by extrusion, heat press, injection molding and so forth.

The sizes of every parts of the screen vary depending on its applications. For information, in the case of the lenticules of the screen shown in Fig. 8, the width $P_1$ of the crest 1 is selected to range betwen 0.2 and 1.5 mm, while the width $P_2$ of the trough 2 is selected to be between 0.3 and 1.5 mm. Thus, the pitch P is selected to fall between 0.5 and 3 mm, while the height H is selected to range between 0.2 and 2 mm.

The rear projection screen of the invention can easily be formed even when the lenticulated surface has a narrow or restricted trough 2. From the view point of manufacture it is advantageous that the lens surface is formed in the trough 2 because of ready removal from the mold as compared with the case where the crests are interconnected through the flank to the comparatively narrow trough 2. The flank 3 need not always be straight but can have a curvilinear profile.

In order to further increase the diffusion of light in both vertical and horizontal directions in the rear projection screen, it is advisable to provide the medium with additional light diffusing means. For instance, it is possible to uniformly mix and disperse in the medium one, two or more additives which are neither molten in the liquid medium such as molten acrylic resin nor make chemical reaction therewith. Examples of such additives are inorganic diffusion agents such as $SiO_2$, $CaCO_3$, $Al_2O_3$, $TiO_2$, $BaSO_4$, ZnO and fine powdered glass, and organic diffusion agents such as polystyrene, styrene-acrylonitrile copolymer or the like. It is also effective to form a layer containing such diffusion agents. Alternatively, minute roughness is made in the incidence surface or the surface of the crest. By employing such diffusion means, it is possible to effect a greater diffusion of light in the angle region of $\omega$ and $\varphi$ in Fig. 9, and also to increase the diffusion of light in the vertical direction in Fig. 1.

It is also effective to add a suitable dye or pigment in the medium to control the color tone. As a measure for preserving a large diffusion of light in the vertical direction, it is effective to integrally incorporate a horizontally extending cylindrical lenses (lenticules) with the above-mentioned lenticules (lenticules).

The contrast of the picture element is reduced by ambient light impinging one side surface of the screen. In order to avoid such a reduction in the contrast, it is possible to enhance the contrast of the picture element by forming, on the total reflection surface 31, a light absorbing layer 5 which prevents the transmission of light. Since there is a fear, however, that the light absorbing layer 5 inconveniently absorbs a part of the light reflected by the total reflection surface 31, although such a part is negligibly small, in order to avoid such an absorption of light, it is preferred to form on the total reflection surface an additional coating layer 6 of a refractive index smaller than that of the medium and then provide the light absorbing layer 5 on the coating layer 6. By so doing, it is possible to eliminate the absorption of even small part of the light reflected by the total reflection surface 31 and to project the rays from the picture elements more effectively. As the material having smaller refractive index, for example, it is possible to use a resin containing fluorine when the medium is made of an acrylic resin. It is possible to use a reflecting layer of, for example, aluminum as the coating layer 6.

Practical examples of rear projection screens of the invention are shown below.

Example 1

A sheet of 3 mm thick was formed from a material mainly consisting of a partially polymerized methacrylate with an additive of $SiO_2$ as a diffusion agent. With this sheet, a screen having lenticules on the projecting side surface similar to that as shown in Fig. 1 was formed by a heat press. The pitch of the lenticules was 0.75 mm, the radius of curvature of the crest was 0.4R and the angle $\alpha$ was 70°. Also, the focal length f of the Fresnel lens was 1.2 m.

Brightness characteristics of the thus formed screen were evaluated. It was confirmed that the value Go and the angle $\beta$ are 8 and 24°, respectively. The screen exhibited a superior performance to make the image visible over a wide angle of field of vision which materially exceeds 55°.

Example 2

Using a similar sheet as Example 1, a screen was formed by a heat press to have lenticules similar to those in Fig. 1 and provided in the projecting side surface thereof with a Fresnel lens similar to that of Example 1. The pitch and height of the lenticules were 0.7 mm, while the angle $\alpha$ 75°. The Go value and the angle $\beta$ were 5.3 and 22°, respectively, but the screen showed good characteristics to make the image visible within the range of angle of field of vision up to 50°.

Example 3

Using a similar sheet as Example 1, a screen having a form substantially equal to that shown in Fig. 5 was formed. The pitches of the lenticules having the total reflection surfaces was 0.5 mm, the pitch of the circular lenticules was 0.7 mm and the height was 0.5 mm. The angle $\alpha$ and the focal length f of the Fresnel lens were 75° and 1.2 m, respectively. The thus obtained screen showed high Go value and large angle $\beta$ which are 6.6 and 32°, respectively. The screen had good performance to make the image visible over a wide angle of field of vision of up to 60°, advantageously.

**Claims**

1. A rear projection screen having a viewing side (A), a projection side (B), and formed, on at least said viewing side, lenticulations having a repetition of vertically extending lens units each having a crest (1), troughs (2) and inclined flanks (3) connecting between said crest and said troughs, characterized in that each of said inclined flanks (3) is so arranged that at least a part thereof provides a totally reflecting surface (31), whereby light rays impinging onto said totally reflecting surface (31) are reflected internally at the medium interface between the ambient air and said flanks (3), and therefore, all light rays ($Y_1$) impinging onto said total reflection surface (31) are reflected towards said crest (1) and emitted from parts other than said flanks, and that a lens surface is formed in each of said troughs (2) between said lens units.

2. A rear projection screen according to claim 1, characterized in that a Fresnel lens (4) is formed on the projecting side (B) of said screen.

3. A rear projection screen according to claim 1 or 2, characterized in that said total reflection surface (31) is formed over the entire area of said flank (3).

4. A rear projection screen according to one of the claims 1 to 3, characterized in that the angle between said each total reflection surface (31) and said projection side (B) satisfies the following condition:

$$\alpha \geq E_g$$

where sin $E_g = 1/n$, n being the refraction index of the screen medium.

5. A rear projection screen according to any one of the preceding claims, characterized in that the medium of the rear projection screen includes a light diffusion means.

6. A rear projection screen according to claim 5, characterized in that said light diffusion means includes an inorganic or organic pigment dispersed in said medium.

7. A rear projection screen according to one of the claims 1 to 6, characterized in that additionally for improving the contrast of the image on the rear projection screen a coating layer (6) of a substance having a smaller refractive index than said medium and a light absorbing layer (5) is applied on the outer surface of said totally reflecting surface (31).

**Patentansprüche**

1. Durchlicht-Projecktionsschirm mit einer Betrachtungsseite (A), einer Projektionsseite (B) und mit einer zumindest auf der Betrachtungsseite ausgebildeten Linsenrasterung, die eine Aneinanderreihung vertikal verlaufender Linseneinheiten aufweist, die jeweils einen Scheitel (1), Mulden (2) und geneigte Flanken (3) aufweisen, die den Scheitel und die Mulden verbinden, dadurch gekennzeichnet, daß jede geneigte Flanke (3) so angeordnet ist, daß zumindest ein Teil von ihr eine total reflektierende Oberfläche (31) bildet, wobei Lichtstrahlen, die auf die total reflektierende Oberfläche (31) auftreffen, im Inneren an der Mediumgrenzfläche zwischen der umgebenden Luft und den Flanken (3) reflektiert werden und so alle Lichtstrahlen ($Y_1$), die auf die total reflektierende Oberfläche (31) auftreffen, in Richtung des Scheitels (1) reflektiert werden und an von den Flanken verschiedenen Stellen austreten, und daß in jeder Mulde (2) zwischen den Linseneinheiten eine Linsenoberfläche ausgebildet ist.

2. Durchlicht-Projektionsschirm nach Anspruch 1, dadurch gekennzeichnet, daß auf der Projektionsseite (B) des Schirms eine Fresnel-Linse (4) ausgebildet ist.

3. Durchlicht-Projektionsschirm nach Anspruch 1 oder 2, dadurch gekennzeichnet, daß die total reflektierende Oberfläche (31) über den gesamten Bereich der Flanken (3) ausgebildet ist.

4. Durchlicht-Projektionsschirm nach einem der Ansprüche 1 bis 3, dadurch gekennzeichnet, daß der Winkel zwischen jeder total reflektierenden Oberfläche (31) und der Projektionsseit (B) folgender Bedingung genügt:

$$\alpha \geq E_g$$

wobei sin $E_g = 1/n$ und n der Brechungsindex des Schirmmediums ist.

5. Durchlicht Projektionsschirm nach einem der Ansprüche 1 bis 4, dadurch gekennzeichnet, daß das Medium des Durchlicht-Projektionsschirms Lichtstreuungselemente enthält.

6. Durchlicht-Projektionsschirm nach Anspruch 5, dadurch gekennzeichnet, daß die Lichtstreuungselemente ein anorganisches oder organisches Pigment aufweisen, das in dem Medium verteilt ist.

7. Durchlicht-Projektionsschirm nach einem der Ansprüche 1 bis 6, dadurch gekennzeichnet, daß zur Verbesserung des Bildkontrastes auf dem Durchlicht-Projektionsschirm desweiteren eine Überzugsschicht (6) einer Substanz, die einen geringeren Brechungsindex als das Medium aufweist, une eine lichtabsorbierende Schicht (5) auf die äußere Oberfläche der total reflektierenden Oberfläche (31) aufgebracht ist.

**Revendications**

1. Ecran de rétroprojection comportant une face à regarder (A) et une face de projection (B), et des lenticulations, formées sur au moins la surfaces à regarder, ayant une pluralité d'unités lenticulaires s'étendant verticalement, chacune avec une crête (1) un creux (2) et des flancs inclinés (3) reliant les crêtes au creux, caractérisé par le fait que chacun desdits flancs inclinés (3) est agencé de telle sorte qu'au moins une partie de ceux-ci procure une surface à réflexion totale (31), les rayons lumineux incidents sur ladite surface à réflexion totale (31) étant réfléchis vers l'intérieur à l'interface formée par l'air ambient et ledit flanc (3) de sorte que tous les rayons lumineux ($Y_1$) incident sur ladite surface à réflexion totale (31) sont réfléchis vers ladite crête (1) et émis par des parties autres que lesdits flancs, et en ce qu'une surface lenticulaire est formée sur chacun desdits creux (2) entre lesdites unités lenticulaires.

2. Ecran de rétroprojection selon la revendication 1, caractérisé par le fait qu'une lentille de Fresnel (4) est formée sur la face de projection (B) dudit écran.

3. Ecran de rétroprojection selon la revendication 1 ou 2, caractérisé par le fait que ladite surface à réflexion totale (31) est formée sur toute la surface dudit flanc (3).

4. Ecran de rétroprojection selon l'une des revendications 1 à 3, caractérisé par le fait que l'angle entre ladite surface de réflexion totale (31) et ladite face de projection (B) répond à la condition suivante, $\alpha \geq Eg$, où $\sin Eg = 1/n$, n étant l'indice de réfraction de la matière de l'écran.

5. Ecran de rétroprojection selon l'une quelconque des revendications précédentes, caractérisé par le fait que la matière de l'écran de rétroprojection comporte des moyens de diffusion de la lumière.

6. Ecran de rétroprojection selon la revendication 5, caractérisé par le fait que lesdits moyens de diffusion de la lumière comportent un pigment organique ou anorganique dispersé dans ladite matière.

7. Ecran de rétroprojection selon l'une des revendications 1 à 6, caractérisé par le fait qu'en outre, pour augmenter le contraste de l'image, sur l'écran de rétroprojection, on applique sur la superficie de ladite surface de réflexion totale (31) une couche de revêtement (6) d'une substance ayant un indice de réfraction plus faible que la matière et une couche (5) absorbant la lumière.

FIG.1

A
32
31
21
3
1
2
B
XI
XI

FIG.2

A
3
1
2
B

FIG.3

A
3
1
2
B
XIII
XIII

FIG.4

A
3
1
2
B
4

FIG.5

A
3
1
2
B
4

FIG. 6

1
32
5
6
31
2

FIG. 7

P1
Y2
X2
32
2θ
2θ
Q
3
β
θ
31
θ
θ
θ
2
α
N
X1
Y1

F I G. 8

P
A
P1
P2
P2
I
V
Q
r1
β
β
32
P/2
3
31
r2
N
V
H
2
2
21
XII
XII
B
Z
Y
X
Y
Z

# FIG.9

ω
X1
X2
φ
Z1
Y2
Y'2
Y'1
Y1
Z2
ϕ
11
2θ
32
32
θ
31
31
θ
N
a
θ
21
Y2
Y'2
Y1
X1
X2
Z1
(Y'1)
Z2

Z1
Z2
ϕ
Z2
φ
φ
ω
X1
X2
1
2
3
31
32
X1
X2
Y1
Y2
Y'2
Z1(Y'1)
Z2

FIG.10

F I G. 11

10
20
30
40

F I G. 12

ω + φ
φ
20
30
40
50

F I G. 13

20
30
40
50

FIG.14

171
173
172